(19)

**Europäisches Patentamt**

**European Patent Office**

**Office européen des brevets**

(11) **EP 2 584 194 A2**

(12) **EUROPEAN PATENT APPLICATION**

(43) Date of publication:
**24.04.2013 Bulletin 2013/17**

(51) Int Cl.:
*F03D 7/02* (2006.01)       *F03D 7/04* (2006.01)

(21) Application number: **12182409.8**

(22) Date of filing: **30.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.10.2011 CN 201110320973**

(71) Applicant: **Sinovel Wind Group Co., Ltd Haidian District, Beijing 100872 (CN)**

(72) Inventor: **Gong, Yupeng
100872 Beijing (CN)**

(74) Representative: **Pfenning, Meinig & Partner GbR Patent- und Rechtsanwälte
Joachimstaler Strasse 12
10829 Berlin (DE)**

(54) **Power control method and system for wind generating set**

(57) The invention provides a power control method and a power control system for a wind generating set. The method comprises: acquiring an actual torque $T_N$ and a preset torque $T_M$ of the wind generating set; and judging whether a first PID controller and a second PID controller of the wind generating set need to be simultaneously operated according to the actual torque $T_N$ and the preset torque $T_M$, and if so, simultaneously operating the first PID controller and the second PID controller. According to the power control method and the power control system for the wind generating set, by judging whether the first PID controller and the second PID controller of the wind generating set need to be simultaneously operated in real time, flicker of the wind generating set can be reduced, and the wind generating set can work in a state as close to an optimal state as possible.

```
┌──────────────────────────────────────────────────────────┐
│  acquiring an actual torque T_N and a preset torque T_M   │ ── 101
│  of the wind generating set                               │
└──────────────────────────────────────────────────────────┘
                          │
                          ▼
┌──────────────────────────────────────────────────────────┐
│  judging whether a first PID controller and a second PID  │
│  controller of the wind generating set need to be         │
│  simultaneously operated according to the actual torque   │ ── 102
│  T_N and the preset torque T_M, and if so, simultaneously │
│  operating the first PID controller                       │
│  and the second PID controller                            │
└──────────────────────────────────────────────────────────┘
```

FIG. 1

EP 2 584 194 A2

**Description**

FIELD OF THE TECHNOLOGY

The invention relates to electromechanical control technology, in particular to a power control method and a power control system for a wind generating set.

BACKGROUND

As a clean and pollution-free renewable energy source, wind energy has gained more and more attention. However, because of uncertainty of wind resource and operating characteristics of a wind generating set itself, the output power of a wind generating set fluctuates, so that the electrical energy quality of a power grid is affected, for example, voltage sag, harmonic wave, flicker and the like are produced. The flicker is one of main negative effects of the wind generating set on the electrical energy quality of the power grid, the flicker is a subjective view feeling of people on illumination fluctuation of lamps, and specifically, the flicker means high fluctuation of the power of the wind generating set in a short time. The flicker directly affects the voltage stability of a grid-connected point of a wind generating set and the safety of a power system.

SUMMARY

The invention provides a power control method and a power control system for a wind generating set for solving the problem of high flicker in the prior art.

Embodiments of the invention provide a power control method for a wind generating set. The method comprises the following steps:

Acquiring an actual torque $T_N$ and a preset torque $T_M$ of the wind generating set; and

judging whether a first proportion integral differential (PID) controller and a second PID controller of the wind generating set need to be simultaneously operated according to the actual torque $T_N$ and the preset torque $T_M$, and if so, simultaneously operating the first PID controller and the second PID controller..

According to the power control method for the wind generating set, preferably, the step of simultaneously operating the first PID controller and the second PID controller comprises:

sending an operating signal to one or both the first PID controller and the second PID controller which is not operated.

According to the power control method for the wind generating set, preferably, the rated gain of the first PID controller and a rated gain of the second PID controller are set to be different.

According to the power control method for the wind generating set, preferably, the rated gain of the second PID controller is 4 times that of the first PID controller.

According to the power control method for the wind generating set, preferably, the actual gain of the first PID controller and an actual gain of the second PID controller are adjusted, so that the actual torque of the wind generating set is not greater than the maximum preset torque or not smaller than the minimum preset torque, the maximum preset torque is a maximum torque corresponding to the current revolving speed, and the minimum preset torque is a minimum torque corresponding to the current revolving speed.

According to the power control method for the wind generating set, preferably, the step of acquiring the actual torque $T_N$ and the preset torque $T_M$ of the wind generating set comprises the following steps:

Acquiring an actual revolving speed of the wind generating set;

acquiring the actual torque $T_N$ of the wind generating set according to an actual revolving speed difference, wherein the actual revolving speed difference is the difference between the actual revolving speed of the current moment and the actual revolving speed of a preset moment; and

acquiring the preset torque $T_M$ of the wind generating set according to a preset working curve and the actual revolving speed.

According to the power control method for the wind generating set, preferably, the step of judging whether the first PID controller and the second PID controller of the wind generating set need to be simultaneously operated according to the actual torque $T_N$ and the preset torque $T_M$ comprises the following steps:

Comparing the difference between a ratio of the absolute value of $(T_N-T_M)$ to $T_M$ and a preset threshold value;

when the ratio of the absolute value of $(T_N-T_M)$ to $T_M$ is smaller than or equal to the preset threshold value, operating the first PID controller, and prohibiting the second PID controller from working;

when the ratio of the absolute value of $(T_N-T_M)$ to $T_M$ is greater than the preset threshold value, simultaneously operating the first PID controller and the second PID controller;

wherein, the rated gain of the first PID controller is smaller than that of the second PID controller.

According to the power control method for the wind generating set, preferably, the preset threshold value is set at 0.02 to 0.10.

According to the power control method for the wind generating set, preferably, before the difference between the ratio of the absolute value of $(T_N-T_M)$ to $T_M$ and the preset threshold value is compared, the method also comprises the following steps of:

Judging a revolving speed section of the actual revolving speed of the wind generating set in a working curve;

when the actual revolving speed is in a first revolving speed section, adjusting an actual gain of the first PID controller and an actual gain of the second PID controller to 30 to 60 percent of the rated gain of the first PID controller and the rated gain of the second PID controller, respectively, wherein the revolving speed in the first revolving speed section is greater than or equal to 0 and smaller than or equal to m1;

when the actual revolving speed is at the second revolving speed section, adjusting the actual gain of the first PID controller and the actual gain of the second PID controller to 60 to 85 percent of the rated gain of the first PID controller and the rated gain of the second PID controller, respectively, wherein the revolving speed of the second revolving speed section is greater than m1 and smaller than or equal to m2;

when the actual revolving speed is at the third revolving speed section, adjusting the actual gain of the first PID controller and the actual gain of the second PID controller to 90 to 100 percent of the rated gain of the first PID controller and the rated gain of the second PID controller, respectively, wherein the revolving speed of the third revolving speed section is greater than m2 and smaller than or equal to m3;and

when the actual revolving speed is at the fourth revolving speed section, adjusting the actual gain of the first PID controller and the actual gain of the second PID controller to 70 to 90 percent of the rated gain of the first PID controller and the rated gain of the second PID controller, respectively, wherein the revolving speed of the fourth revolving speed section is greater than m3 and smaller than or equal to m4;

wherein, m1 is greater than or equal to 600rmp, m2 is greater than m1, m3 is greater than m2, m4 is greater than m3, and the m4 is the rated revolving speed of the wind generating set.

The invention also provides a power control system for a wind generating set, comprising:

A torque acquisition module, which is used for acquiring an actual torque $T_N$ and a preset torque $T_M$ of the wind generating set; and

a first judgment module, which is used for judging whether a first PID controller and a second PID controller of the wind generating set need to be simultaneously operated according to the actual torque $T_N$ and the preset torque $T_M$, and if so, simultaneously operating the first PID controller and the second PID controller.

according to the power control system for the wind generating set, preferably, the first judgment module is concretely used for judging whether the first PID controller and the second PID controller of the wind generating set are simultaneously operated according to the actual torque $T_N$ and the preset torque $T_M$, and if so , sending an operating signal to one or both of the first PID controller and the second PID controller which is not operated.

According to the power control system for the wind generating set, preferably, a rated gain of the second PID controller is 4 times that of the first PID controller.

According to the power control system for the wind generating set, preferably, the system also comprises:

A value limiting module, which is used for adjusting an actual gain of the first PID controller and an actual gain of the second PID controller, so that an actual torque of the wind generating set is not greater than a maximum preset torque or not smaller than a minimum preset torque, the maximum preset torque is a maximum torque corresponding to the current revolving speed, and the minimum preset torque is a minimum torque corresponding to the current revolving speed.

According to the power control system for the wind generating set, preferably, the torque acquisition module comprises:

A first acquisition sub-module, which is used for acquiring the actual revolving speed of the wind generating set;

A second acquisition sub-module, which is used for acquiring an actual torque $T_N$ of the wind generating set according to the actual revolving speed difference, wherein the actual revolving speed difference is the difference between the actual revolving speed of the current moment and the actual revolving speed of a preset moment; and

A third acquisition sub-module, which is used for acquiring the preset torque $T_M$ of the wind generating set according to the preset working curve and a actual revolving speed.

According to the power control system for the wind generating set, preferably, the judgment module comprises:

A comparison sub-module, which is used for comparing a ratio of the absolute value of $(T_N-T_M)$ to $T_M$ with a preset threshold value; and

an operating selection sub-module, which is used for operating the first PID controller and prohibiting the second PID controller from working when the ratio of the absolute value of $(T_N-T_M)$ to $T_M$ is smaller than or equal to the preset threshold value, and simultaneously operating the first PID controller and the second PID controller when the ratio of the absolute value of $(T_N-T_M)$ to $T_M$ is greater than the preset threshold value, wherein, the rated gain of the first PID controller is smaller than that of the second PID controller, and the preset threshold value is 0.02 to 0.10.

According to the power control system for the wind generating set, preferably, the system also comprises a gain adjusting module, wherein the gain adjusting module comprises:

A second judgment sub-module, which is used for judging a revolving speed section of the actual revolving speed of the wind generating set in a working curve;

the first adjusting sub-module, which is used for adjusting the actual gain of the first PID controller and the actual gain of the second PID controller to 30 to 60 percent of the rated gain of the first PID controller and the rated gain of the second PID controller, respectively, wherein the revolving speed of the first revolving speed section is greater than or equal to 0 and smaller than or equal to m1;

the second adjusting sub-module, which is used for adjusting the actual gain of the first PID controller and the actual gain of the second PID controller to 60 to 85 percent of the rated gain of the first PID controller and the rated gain of the second PID controller, respectively, wherein the revolving speed of the second revolving speed section is greater than m1 and smaller than or equal to m2;

the third adjusting sub-module, which is used for adjusting the actual gain of the first PID controller and the actual gain of the second PID controller to 90 to 100 percent of the rated gain of the first PID controller and the rated gain of the second PID controller, respectively, wherein the revolving speed of the third revolving speed section is greater than m2 and smaller than or equal to m3; and

the fourth adjusting sub-module, which is used for adjusting the actual gain of the first PID controller and the actual gain of the second PID controller to 70 to 90 percent of the rated gain of the first PID controller and the rated gain of the second PID controller, respectively, wherein the revolving speed of the fourth revolving speed section is greater than m3 and smaller than or equal to m4;

wherein, m1 is greater than or equal to 600 rmp, m2 is greater than m1, m3 is greater than m2, m4 is greater than m3, and the m4 is the rated revolving speed of the wind generating set; and

wherein the second judgment sub-module is also used for triggering the first adjusting sub-module when the actual revolving speed is in the first revolving speed section, triggering the second adjusting sub-module when the actual revolving speed is in the second revolving speed section, triggering the third adjusting sub-module when the actual revolving speed is in the third revolving speed section, and triggering the fourth adjusting sub-module when the actual revolving speed is in the fourth revolving speed section.

According to the power control method and the power control system for the wind generating set, by judging whether the first PID controller and the second PID controller of the wind generating set are simultaneously operated according to the actual torque $T_N$ and the preset torque $T_M$, flicker of the wind generating set can be reduced, and the wind generating set can work in a state as close to an optimal state as possible.

BRIEF DESCRIPTION OF THE DRAWINGS

Figure 1 is a flow diagram of a power control method for a wind generating set according to an embodiment of the invention;

Figure 2A is a working curve diagram of a wind generating set adopting one PID controller;

Figure 2B is a working curve diagram of a wind generating set adopting two PID controllers;

Figure 3A is a working curve diagram of a wind generating set without adopting a torque limiting value according to an embodiment of the invention;

Figure 3B is a working curve diagram of a wind generating set adopting a torque limiting value according to the embodiment of the invention;

Figure 4 is a structural schematic diagram of a power control system for a wind generating set according to an embodiment of the invention;

Figure 5 is a structural schematic diagram of a power control system for a wind generating set according to an embodiment of the invention; and

Figure 6 is a structural schematic diagram of a power control system for a wind generating set according to an embodiment of the invention.

DETAILED DESCRIPTION

At least two proportion integral differential (PID) controllers are adopted for controlling the power of a wind generating set in the invention, namely a nonlinear driver is controlled by using a linear approximation function of the PID controllers. The number of the PID controllers can be three, four and even more, and the following embodiments are described by using only two PID controllers as an example. Specifically, the PID controller is a feedback loop component and is used for comparing acquired data with a reference value to obtain difference therebetween, the difference is used for calculating a new input value, and the new input value aims to allow the data of the system to reach or be kept at the reference value as accurate as possible. In the following embodiments, the PID controllers are adopted for adjusting the actual torque of the wind generating set, so as to keep the actual torque close to a preset torque of the wind generating set, namely the purpose of controlling the power of the wind generating set is fulfilled by controlling the actual torque of the wind generating set, and the flicker of the wind generating set is reduced. The preset torque can be set according to the actual requirement. For example, the preset torque can be the actual torque of the previous 1 second of the current moment, and can also be an ideal torque of the wind generating set in an optimal working state.

Particularly, unless otherwise specified, the actual torque described in the invention is electromagnetic torque, and the revolving speed is revolving speed of the generating set.

**Embodiment I**

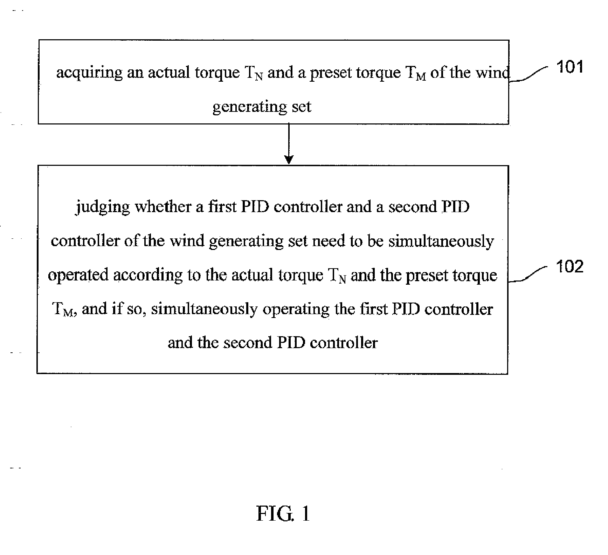

Embodiment I provides a power control method for a wind generating set, and the control method for the wind generating set is suitable for a power control system of the wind generating set. As shown in Figure 1, the power control method comprises the following steps:

Step 101, acquiring an actual torque $T_N$ and a preset torque $T_M$ of the wind generating set.

This step can be implemented by the power control system of the wind generating set, and specifically by a main control unit programmable logic controller (PLC) of the power control system of the wind generating set. The acquired actual torque $T_N$ of the wind generating set can be obtained by calculating the current, the revolving speed and the like of the generating set detected through the main control unit PLC, and can also be directly measured by a torque meter and supplied to the power control system of the wind generating set.

Step 102, judging whether a first PID controller and a second PID controller of the wind generating set need to be simultaneously operated according to the actual torque $T_N$ and the preset torque $T_M$, and if so, simultaneously operating the first PID controller and the second PID controller.

This step can be implemented by the power control system of the wind generating set, and specifically by a main control unit PLC of the power control system of the wind generating set. Specifically, when neither of the first PID controller and the second PID controller is operated or only one of them is operated at the time the judgment result is to simultaneously operate the first PID controller and the second PID controller, sending a starting signal to the non-operated PID controller of the first PID controller and the second PID controller, so that the first PID controller and the second PID controller are simultaneously operated.

When the judgment result is not to simultaneously operate the first PID controller and the second PID controller of the wind generating set, sending the operating signal to the corresponding PID controller, so that only one PID controller is operated; and when the judgment result is to simultaneously operate the first PID controller and the second PID controller of the wind generating set, sending operating signals to the first PID controller and the second PID controller, so that the first PID controller and the second PID controller are simultaneously operated.

According to the power control method for the wind generating set of the embodiment I, whether the first PID controller and the second PID controller of the wind generating set need to be simultaneously operated is judged according to the actual torque $T_N$ and the preset torque $T_M$ to adjust the actual torque $T_N$, so that the actual torque $T_N$ is close to the preset torque $T_M$, namely when the difference between the actual torque $T_N$ and the preset torque $T_M$ is small (which will be defined later in this specification), only one of the PID controllers is operated, so that the actual torque $T_N$ is kept close to the preset torque $T_M$; when the difference between the actual torque $T_N$ and the preset torque $T_M$ is large(which will be defined later in this specification), the first PID controller and the second PID controller are simultaneously operated, so that the actual torque $T_N$ is kept close to the preset torque $T_M$ at a higher speed to ensure that the wind generating set works in an optimal state; and when the difference between the actual torque $T_N$ and the preset torque $T_M$ is small again, only one of the PID controllers is operated, so that the actual torque $T_N$ is kept close to the preset torque $T_M$ in a relatively steady mode to fulfill the purpose of reducing flicker.

It should be pointed out that, in practical application, preferably one of the PID controllers is operated all the time, and whether the other PID controller needs to be operated, namely whether the first PID controller and the second PID controller need to operated simultaneously operated, is judged through the actual torque $T_N$ and the preset torque $T_M$. The first PID controller and the second PID controller can be connected in parallel.

Two PID controllers with different gains can be adopted in the embodiment I, so that the flicker of the wind generating set can be reduced, the working state of the wind generating set is kept close to the optimal working state, and the actual requirement is met. The following describes a specific example by using the preset torque $T_M$ as an ideal torque in the optimal working state.

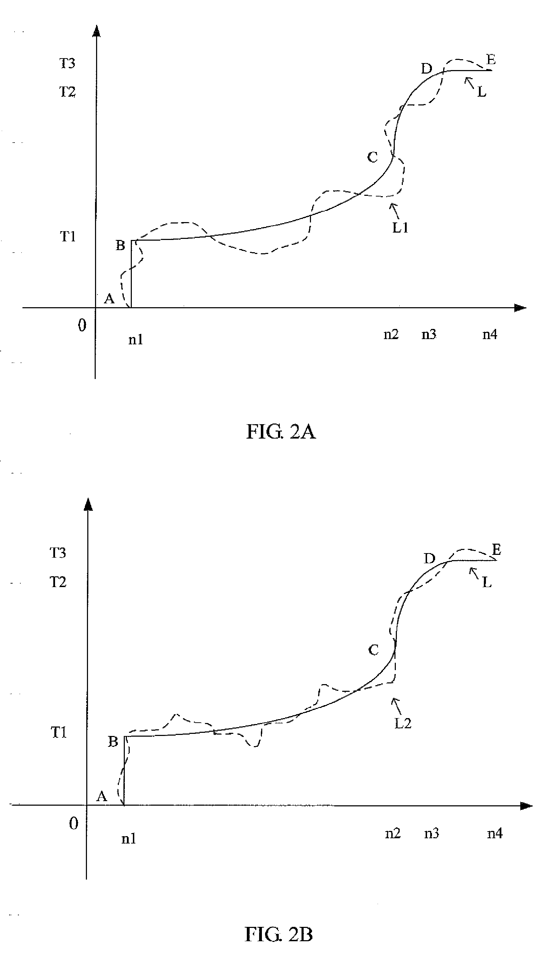

Figure 2A is a curve schematic diagram showing the relationship of the actual torque and the actual revolving speed of the wind generating set when only one PID controller is adopted. Figure 2B is a curve schematic diagram showing the relationship of the actual torque and the actual revolving speed of the wind generating set when two PID controllers are adopted. As can be seen from the diagram, the curve L1 of the Figure 2A has high fluctuation, and greatly deviates from the working curve L. The curve L2 of the Figure 2B has low fluctuation, and deviates from the working curve L less. Namely, by adjusting the number of the operated PID controllers in real time, the flicker can be reduced, and the control system for the wind generating set can be close to an optimal working state.

The working curve L is a curve diagram showing the relationship between the revolving speed and the torque of the wind generating set in the optimal working state. The preset torque $T_M$ in the working curve L can be acquired according to the following formula: $T_M = k \times (n)^2$, wherein:

$$k = \frac{\rho \times \pi \times r^5 \times Cp}{2 \times G^3 \times \lambda^3},$$ $\rho$ is air density, $\pi$

is a constant, r is an impeller radius of the wind generating set, Cp is a wind energy utilization coefficient of the wind generating set, G is a transmission ratio of a gear box of the wind generating set, $\lambda$ is a rip speed ratio of the wind generating set, $\lambda$ is equal to the ratio of the revolving speed of the rip to the wind speed, and n is the actual revolving speed. Preferably, the revolving speed in the present application is equal to $\lambda \times (d/2)$, d is the diameter of an impeller.

The working curve L is an ideal working curve. Under the corresponding revolving speed, if the actual torque of the wind generating set is consistent with the working curve L, the working state of the wind generating set is optimal, namely the efficiency of converting wind energy into electrical energy is highest.

Preferably, the rated gains of the first PID controller and the second PID controller are different. Wherein, the rated gains comprise rated proportional gain, rated integral gain and rated differential gain. Specifically, the rated proportional gain of the first PID controller is smaller than that of the second PID controller, the rated integral gain of the first PID controller is smaller than that of the second PID controller, and the rated differential gain of the first PID controller is smaller than that of the second PID controller. The rated gains are maximum gains of the PID controllers, and all gains in the embodiment are gains of the power of the wind generating set.

As shown in Figures 2A and 2B, suppose the rated gain of the first PID controller is smaller than that of the second PID controller, when the difference between the actual torque $T_N$ and the preset torque $T_M$ is small, only the first PID controller is operated, namely the PID controller with smaller rated gain, so that the actual torque of the wind generating set is kept close to the preset torque in a steady mode. When the difference between the actual torque $T_N$ and the preset torque $T_M$ is large, the first PID controller and the second PID controller are simultaneously operated, so that the actual torque of the wind generating set is made close to the preset torque at a higher speed; and when the difference between the actual torque $T_N$ and the preset torque $T_M$ is small again, only the first PID controller needs to be operated.

Preferably, the rated gain of the second PID controller is 4 times that of the first PID controller. The purpose of reducing flicker can be fulfilled by adjusting the actual gains of the first PID controller and the second PID controller respectively. The actual gains of the first PID controller and the second PID controller can be related with their respective rated gains respectively, for example, the actual gains can be the rated gains and can also be a percentage of the rated gains according to a percentage coefficient. For example, at a certain moment, the actual gain of the first PID controller is 30 percent of the rated gain thereof (i.e., a percentage coefficient of 0.3), and the actual gain of the second PID controller is also 30 percent of the rated gain thereof. The percentage coefficient can be set to be the same or different for different PID controllers according to the actual requirement.

**Embodiment II**

The power control method for the wind generating set of the embodiment I is further improved in the embodiment II.

A corresponding maximum preset torque and a corresponding minimum preset torque can be set for each revolving speed, namely the torque is subjected to torque value limitation. Specifically, the actual gain of the first PID controller and the actual gain of the second PID controller can be adjusted, so that the actual torque of the wind generating set is not greater than the maximum preset torque or not smaller than the minimum preset torque, the maximum preset torque is a maximum torque corresponding to the current revolving speed, and the minimum preset torque is a minimum torque corresponding to the current revolving speed.

Optionally, the maximum preset torque can be $1.2k \times n^2$, and the minimum preset torque can be $0.8k \times n^2$. Wherein, $k = \dfrac{\rho \times \pi \times r^5 \times Cp}{2 \times G^3 \times \lambda^3}$, $\rho$ is air density, $\pi$ is a constant, r is an impeller radius of the wind generating set, Cp is a wind energy utilization coefficient of the wind generating set, G is a transmission ratio of a gear box of the wind generating set, $\lambda$ is a rip speed ratio of the wind generating set, $\lambda$ is equal to the ratio of the revolving speed of the rip to the wind speed, and n is the actual revolving speed. Preferably, the revolving speed in the present application is equal to $\lambda \times (d/2)$, d is the diameter of an impeller.

According to the power control method for the wind generating set of the embodiment II, by adopting torque value limitation it is ensured that the actual torque of the wind generating set does not exceed the preset range, so that the flicker of the wind generating set can be further reduced. In practical operation of the wind generating set, the wind speed may be quickly increased at a certain moment, causing abrupt increase of the mechanical torque revolving speed of the wind generating set, which in turn abruptly increases the mechanical torque revolving speed of the wind generating se. Theoretically, because of the special requirement of a wind generating set, the mechanical torque and the actual torque, namely electromagnetic torque, described in the embodiments of the invention have the same magnitude; and if the mechanical torque is increased, the actual torque is also increased, but because the actual revolving speed has already been set with the maximum preset torque and the minimum preset torque, the actual torque does not exceed the maximum preset torque and is not smaller than the minimum preset torque. Thus, by adopting torque value limitation of the embodiment, the energy generated after the wind speed is abruptly increased can be added to the revolving speed of the impeller of the wind generating set, namely the revolving speed of the impeller is increased. As the revolving speed of the impeller can be controlled to increase slowly, theoretically the actual revolving speed and the revolving speed of the impeller can be controlled within the same ragne of value and the actual revolving speed is also slowly increased, therefore the power of the generating set which is related with the product of the actual torque and the actual revolving speed is also slowly changed, and the flicker is reduced. The increase in the revolving speed of the impeller stores the energy generated when the wind speed is abruptly increased. Thus, at a certain subsequent moment, when the mechanical torque is reduced due to abrupt reduce of the wind speed, theoretically the actual torque is also reduced to ensure the consistence of the actual torque and the mechanical torque, but when the actual torque is reduced to the minimum preset torque, the revolving speed of the impeller can be slowly reduced, and the actual revolving speed is slowly reduced, so that the power is slowly changed, and the flicker is further reduced.

**Embodiment III**

The power control method for the wind generating set of the embodiment I and the embodiment II are further specifically described in the embodiment III.

Wherein, the step 101 specifically comprises the following steps of:

Step 1011, acquiring the actual revolving speed of the wind generating set.

wherein the actual revolving speed of the wind generating set can be acquired by many methods, and the actual revolving speed of the wind generating set is generally measured in real time by using a coder.

Step 1012, acquiring the actual torque $T_N$ of the wind generating set according to the actual revolving speed difference, wherein the actual revolving speed difference is the difference between the actual revolving speed of the current moment and the actual revolving speed of a preset moment. Optionally, the preset moment can be the previous 1 second of the current moment, or any value between 1 and 10 seconds, for example, 2, 3, 4, 5, or 6 seconds.

Specifically, the actual torque $T_N$ can be calculated through the first PID or the second PID controller, the actual torque $T_N$ can be calculated through the PID controller by many methods as known in the prior art and, therefore no more details are given here; and

Step 1013, acquiring the preset torque $T_M$ of the wind generating set according to a preset working curve and the actual revolving speed.

The preset working curve in the embodiment III is a preset curve diagram showing the relationship of the optimal revolving speed and the optimal torque of the wind generating set according to the actual requirement. The more the actual working curve of the wind generating set matches the working curve the better. Because of the characteristics of a wind generating set, energy needs to be extracted from the wind. At different wind speeds, different conversion energy of the wind can be obtained by adopting different revolving speeds and torques of the wind generating set. The working curve is a curve set to obtain the maximum energy from the wind by adopting corresponding torques at different revolving speeds within the whole range.

**Embodiment IV**

The power control method for the wind generating set of the above embodiments is further described in the embodiment IV.

Wherein, the step 102 of judging whether the first PID controller and the second PID controller of the wind generating set need to be simultaneously operated according to the actual torque $T_N$ and the preset torque $T_M$ specifically comprises the following steps of:

comparing the difference between the ratio of the absolute value of $(T_N-T_M)$ to $T_M$ and a preset threshold value for the ratio;

when the ratio of the absolute value of $(T_N-T_M)$ to $T_M$ is smaller than or equal to the preset threshold value, operating the first PID controller, and prohibiting the second PID controller from working;

when the ratio of the absolute value of $(T_N-T_M)$ to $T_M$ is greater than the preset threshold value, simultaneously operating the first PID controller and the second PID controller,

wherein, the rated gain of the first PID controller is smaller than that of the second PID controller.

The preset threshold value can be set according to the actual requirement. Preferably, the preset threshold value can be 0.02 to 0.10.

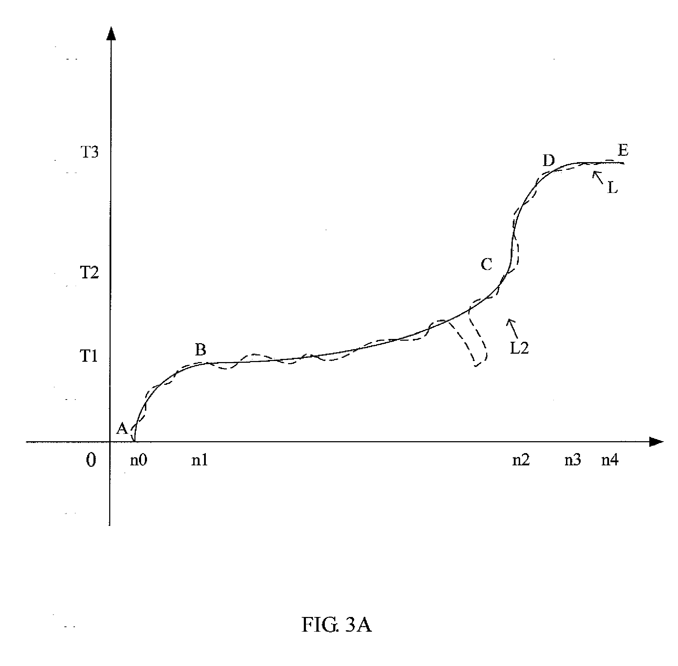

According to the power control method for the wind generating set of the embodiment IV, when the ratio of the absolute value of $(T_N-T_M)$ to $T_M$ is smaller than or equal to the preset threshold value, only the first PID controller is operated, so that the actual torque of the wind generating set is close to the preset torque corresponding to the current actual revolving speed on the working curve, and the wind generating set reaches the preset torque under the condition that the flicker is low. When the ratio of the absolute value of $(T_N-T_M)$ to $T_M$ is greater than the preset threshold value, the first PID controller and the second PID controller are simultaneously operated, namely when the difference between the actual torque and the preset torque is high, the actual torque can quickly approach to the preset torque through the simultaneous operation of the two PID controllers; and when the ratio of the absolute value of $(T_N-T_M)$ to the $T_M$ is smaller than or equal to the preset threshold value, namely when the difference between the actual torque and the preset torque is small, the second PID controller is stopped, and only the first PID controller is operated, so that the actual torque is close to the preset torque in a steady mode. Specifically, Figure 3A shows the working curve adopted in the embodiment IV.

First, judging the revolving speed section of the actual revolving speed of the wind generating set in the working curve;

when the actual revolving speed is at a first revolving speed section, adjusting the actual gain of the first PID controller and the actual gain of the second PID controller to 30 to 60 percent of the rated gain of the first PID controller and the rated gain of the second PID controller, respectively, wherein the revolving speed in the first revolving speed section is greater than or equal to 0 and smaller than or equal to m1;

when the actual revolving speed is at a second revolving speed section, adjusting the actual gain of the first PID controller and the actual gain of the second PID controller to 60 to 85 percent of the rated gain of the first PID controller and the rated gain of the second PID controller, respectively, wherein the revolving speed in the second revolving speed section is greater than m1 and smaller than or equal to m2;

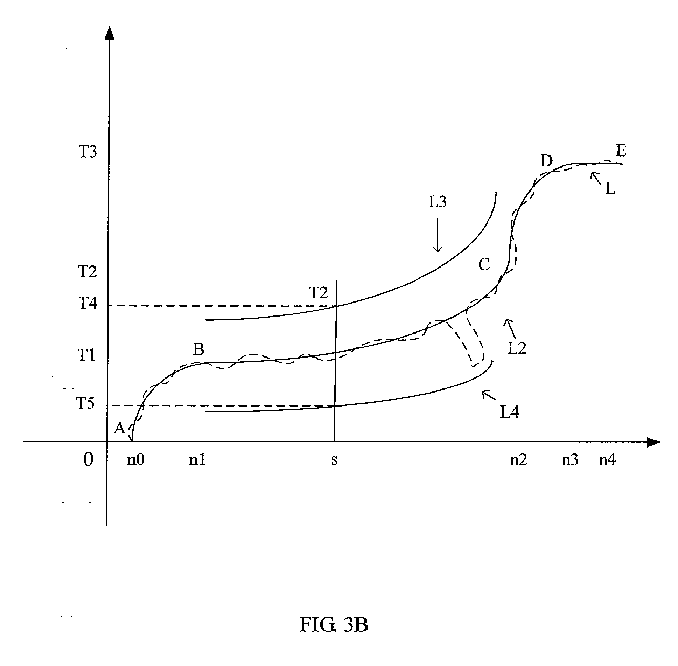

when the actual revolving speed is at a third revolving speed section, adjusting the actual gain of the first PID controller and the actual gain of the second PID controller to 90 to 100 percent of the rated gain of the first PID controller and the rated gain of the second PID controller, respectively, wherein the revolving speed in the third revolving speed section is greater than m2 and smaller than or equal to m3; and

when the actual revolving speed is at a fourth revolving speed section, adjusting the actual gain of the first PID controller and the actual gain of the second PID controller to 70 to 90 percent of the rated gain of the first PID controller and the rated gain of the second PID controller, respectively, wherein the revolving speed in the fourth revolving speed section is greater than m3 and smaller than or equal to m4,

wherein, m1 is greater than or equal to 600rmp, m2 is greater than m1, m3 is greater than m2, m4 is greater than m3, and the m4 is the rated revolving speed of the wind generating set. Preferably, as shown in Figures 2B, 3A, and 3B, m1 is n1, m2 is n2, m3 is n3, and m4 is n4.

The m1, m2, m3 and m4 can be set according to the local actual conditions. For example, in a certain city, m1 can be set at 600rpm, m2 can be set at 610rpm, m3 can be set at 1,400rpm, and the m4 can be set at 1,410rpm.

Thus, the actual gains of the first PID controller and the second PID controller are set at each revolving speed section of the wind generating set, so that the adjustment of the torque of the wind generating set meets the requirement to reduce the flicker. When torque value limitation is adopted, as shown in Figure 3B, L3 and L4 are a maximum torque curve and a minimum torque curve of the second revolving speed section respectively. For example, when the current revolving speed is s, s is greater than m1 and smaller than or equal to m2, the maximum torque corresponding to the revolving speed s is T4, and the minimum torque corresponding to the revolving speed s is T5; and in the actual application, the actual gains of the first PID controller and the second PID controller are adjusted to ensure that the actual torque of the wind generating set is not greater than T4 and not smaller than T5. Therefore, the flicker of the wind generating set is further reduced, and the wind generating set works in a state as close to an optimal state as possible.

A person skilled in the art can understand that: all or some steps for implementing the embodiments of the above method can be carried out through program instruction related hardware, the program can be stored in a computer readable storage medium, and the steps of the embodiments of the method are implemented when the program is executed; and the storage medium comprises various media capable of storing program codes such as a read only memory (ROM), a random access memory (RAM), a disk or an optical disk and the like.

**Embodiment V**

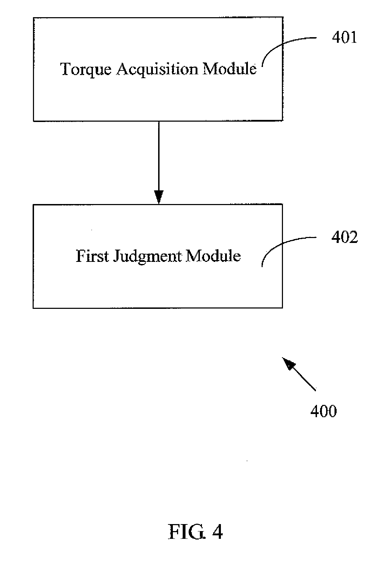

The embodiment V provides a power control system for a wind generating set, and the power control system can be used for implementing the power control method of the embodiment I. Figure 4 shows a structural schematic diagram of the power control system 400 for a wind generating set. The power control system 400 comprises a torque acquisition module 401 and a first judgment module 402. The power control system 400 further comprises a first PID controller (not shown in the diagram) and a second PID controller (not shown in the diagram), or optionally more than two PID controllers. The rated gain of the first PID controller and the rated gain of the second PID controller can be the same or different. For example, the rated gain of the first PID controller can be smaller than that of the second PID controller. Specifically, the rated gain of the second PID controller can be 4 times that of the first PID controller.

The torque acquisition module 401 is used for acquiring an actual torque $T_N$ and a preset torque $T_M$ of the wind generating set. The first judgment module 402 is connected with the torque acquisition module 401 and used for judging whether the first PID controller and the second PID controller of the wind generating set need to be simultaneously operated according to the actual torque $T_N$ and the preset torque $T_M$, and if so, simultaneously operating the first PID controller and the second PID controller. The first PID controller and the second PID controller can be connected in parallel.

Particularly, when the first judgment module 402 judges that the first PID controller and the second PID controller of the wind generating set need to be simultaneously operated, an operating signal is sent to a non-operated PID controller(s) of the first PID controller and the second PID controller. When the first judgment module 402 judges that the first PID controller and the second PID controller of the wind generating set should not be operated simultaneously, an operating signal is sent to a corresponding PID controller to operate one of the first and second PID controllers, either the first or the second controller; and when the judgment result is to simultaneously operate the first PID controller and the second PID controller of the wind generating set, the operating signals are sent to both the first PID controller and the second PID controller, so that the first PID controller and the second PID controller are simultaneously operated. The first PID controller and the second PID controller are connected in parallel.

The rated gains comprise rated proportional gain, rated integral gain and rated differential gain. Specifically, the rated proportional gain of the first PID controller is smaller than that of the second PID controller, the rated integral gain of the first PID controller is smaller than that of the second PID controller, and the rated differential gain of the first PID controller is smaller than that of the second PID controller. The relationship between the actual gain and the rated gain is consistent with that of the embodiment I, and is not explained any more.

The power control system for the wind generating set of the embodiment V can implement the power control method for the wind generating set provided by any above embodiments of the invention, and is provided with corresponding functional modules. The power control system can be realized in a mode of combining software and/or hardware, for example, the power control system can be integrated in a main control unit PLC in the wind generating set.

According to the power control system 400 for the wind generating set of the embodiment V, whether the two PID controllers are to be simultaneously operated is determined through the first judgment module 402 so as to adjust the actual torque and control the power of the wind generating set to fulfill the purpose of reducing flicker. Namely, the actual torque $T_N$ and the preset torque $T_M$ are acquired through the torque acquisition module 401, then the absolute difference of the actual torque and the preset torque is calculated through the first judgment module 402, the ratio of the absolute difference to the preset torque is calculated, and whether the first PID controller and the second PID controller need to be simultaneously operated is judged according to the ratio. When the ratio is high, e.g., large than a preset threshold value, the deviation degree of the actual torque from the preset torque is high, and then the first PID controller and the second PID controller are simultaneously operated, so that the acting effect of the PID controllers can be increased, the actual torque is then quickly close to the preset torque, the flicker is reduced in a short time, and the power is maintained close to the preset power. When the ratio is low, e.g., smaller than the preset threshold value, the deviation degree of the actual torque from the preset torque is low, and then only one PID controller is operated, preferably the PID controller with smaller proportional gain is operated, so that the actual torque keeps close to the preset torque in slow change. Therefore, through the two PID controllers, the purpose of reducing the flicker of the wind generating set can be fulfilled, and the wind generating set can work in a state as close to an optimal state as possible.

To point out, in practical application, one of the PID controllers, either the first or the second PID controller with the first PID controller being preferred, can be operated all the time, and whether the other PID controller is operated, namely whether the first PID controller and the second PID controller are simultaneously operated, is judged through the actual torque $T_N$ and the preset torque $T_{M,}$. A third PID controller or a plurality of PID controllers can be added if desired and controlled by the above method in a similar way.

Preferably, the power control system for the wind generating set also comprises a value limiting module (not shown in the diagram). The value limiting module is used for adjusting the actual gain of the first PID controller and the actual gain of the second PID controller, so that the actual torque of the wind generating set is not greater than the maximum preset torque and not smaller than the minimum preset torque. The maximum preset torque is a maximum torque corresponding to the current revolving speed, and the minimum preset torque is a minimum torque corresponding to the current revolving speed. The value limiting module can limit the torque of the wind generating set to reduce the flicker of the wind generating set.

The acquisition method of the maximum preset torque and the minimum preset torque is similar to that in the embodiment II, and is not explained any more.

Embodiment VI

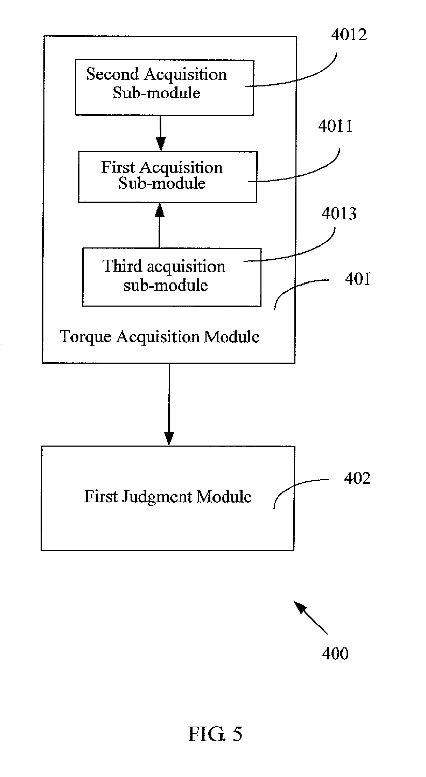

The power control system for the wind generating set of the embodiment V is further explained in the embodiment VI. The Figure 5 shows a structural schematic diagram of the power control system 400 for the wind generating set according to the embodiment VI.

Specifically, the torque acquisition module 401 comprises:

a first acquisition sub-module 4011, a second acquisition sub-module 4012 and a third acquisition sub-module 4013, wherein the first acquisition sub-module 4011 is used for acquiring the actual revolving speed of the wind generating set; the second acquisition sub-module 4012 is connected with the first acquisition sub-module 4011 and used for acquiring the actual torque $T_N$ of the wind generating set according to the actual revolving speed; and the third acquisition sub-module 4013 is connected with the first acquisition sub-module 4011 and used for acquiring the preset torque $T_M$ of the wind generating set according to the preset working curve and the actual revolving speed. The preset working curve can be pre-stored in the third acquisition sub-module 4013. The working curve is a curve diagram showing the relationship of the revolving speed and the torque of the wind generating set in the optimal working state.

The preset torque $T_M$ in the working curve can be acquired according to the following formula: $T_M = k \times (n)^2$ wherein:

$$k = \frac{\rho \times \pi \times r^5 \times Cp}{2 \times G^3 \times \lambda^3}, \rho \text{ is air density, } \pi \text{ is}$$

a constant, r is an impeller radius of the wind generating set, Cp is a wind energy utilization coefficient of the wind generating set, G is a transmission ratio of a gear box of the wind generating set, $\lambda$ is a rip speed ratio of the wind generating set, $\lambda$ is equal to the ratio of the revolving speed of the rip to the wind speed, and n is the actual revolving speed. Preferably, the revolving speed in the present application is equal to $\lambda \times (d/2)$, d is the diameter of an impeller. The working curve is an ideal working curve; and at the corresponding revolving speed, if the actual torque of the wind generating set is consistent with the working curve, the working state of the wind generating set is optimal, namely the efficiency of converting the wind energy into electrical energy is highest.

The method of acquiring the actual torque $T_N$ is similar to that in the embodiment III, and is not explained any more.

Embodiment VII

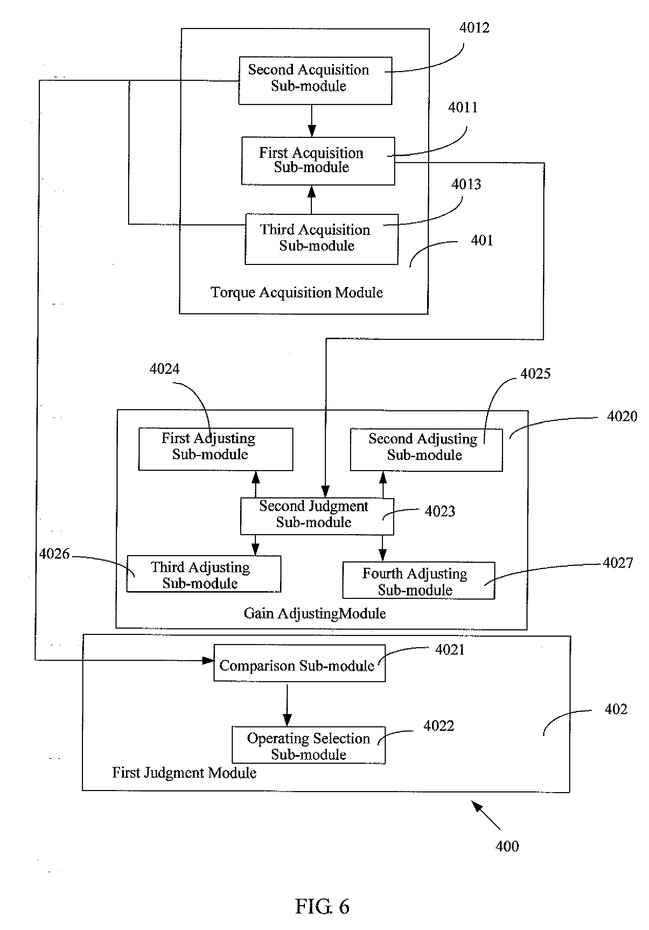

The power control system for the wind generating set of the embodiment V and the embodiment VI is further explained in the embodiment VII. Figure 6 shows a structural schematic diagram of the power control system 400 for the wind generating set according to the embodiment VII. Specifically, the first judgment module 402 comprises a comparison sub-module 4021 and an operating selection sub-module 4022.

The comparison sub-module 4021 is respectively connected with the second acquisition sub-module 4012 and the third acquisition sub-module 4013 and used for comparing the ratio of the absolute value of $(T_N-T_M)$ to $T_M$ with the preset value; and the operating selection sub-module 4022 is used for operating the first PID controller and prohibiting the second PID controller from working when the ratio of the absolute value of $(T_N-T_M)$ to $T_M$ is smaller than or equal to the preset threshold value, and simultaneously operating the first PID controller and the second PID controller when the ratio of the absolute value of $(T_N-T_M)$ to $T_M$ is greater than the preset threshold value, wherein the preset threshold value can be set according to the actual requirement. Preferably, the preset threshold value is 0.02 to 0.10.

According to the power control system 400 for the wind generating set of the embodiment VII, whether only the first torque PID controller is operated or the first PID controller and the second PID controller are simultaneously operated is selected by using the operating selection sub-module 4022, so that the actual torque of the wind generating set is close to the preset torque corresponding to the current actual revolving speed on the working curve, and the wind generating set reaches the preset torque under the condition that the flicker is low.

Optionally, the power control system 400 for the wind generating set also comprises a gain adjusting module 4020, wherein the gain adjusting module 4020 comprises a second judgment module 4023, a first adjusting sub-module 4024, a second adjusting sub-module 4025, a third adjusting sub-module 4026 and a fourth adjusting sub-module 4027.

The second judgment module 4023 can be connected with the first acquisition sub-module 4011, and is used for judging the revolving speed section of the actual revolving speed of the wind generating set in the working curve, triggering the first adjusting sub-module 4024 when the actual revolving speed is at the first revolving speed section, triggering the second adjusting sub-module 4025 when the actual revolving speed is at the second revolving speed section, triggering the third adjusting sub-module 4026 when the actual revolving speed is at the third revolving speed section, and triggering the fourth adjusting sub-module 4027 when the actual revolving speed is at the fourth revolving speed section;

the first adjusting sub-module 4024 is used for adjusting the actual gain of the first PID controller and the actual gain of the second PID controller to 30 to 60 percent of the rated gain of the first PID controller and the rated gain of the second PID controller, respectively ,

wherein the revolving speed of the first revolving speed section is greater than or equal to 0 and smaller than or equal to m1;

the second adjusting sub-module 4025 is used for adjusting the actual gain of the first PID controller and the actual gain of the second PID controller to 60 to 85 percent of the rated gain of the first PID controller and the rated gain of the second PID controller, respectively, wherein the revolving speed of the second revolving speed section is greater than m1 and smaller than or equal to m2;

the third adjusting sub-module 4026 is used for adjusting the actual gain of the first PID controller and the actual gain of the second PID controller to 90 to 100 percent of the rated gain of the first PID controller and the rated gain of the second PID controller, respectively, wherein the revolving speed of the third revolving speed section is greater than m2 and smaller than or equal to m3; and

the fourth adjusting sub-module 4027 is used for adjusting the actual gain of the first PID controller and the actual gain of the second PID controller to 70 to 90 percent of the rated gain of the first PID controller and the rated gain of the second PID controller, respectively, wherein the revolving speed of the fourth revolving speed section is greater than m3 and smaller than or equal to m4;

wherein, m1 is greater than or equal to 600rmp, m2 is greater than m1, m3 is greater than m2, m4 is greater than m3, and the m4 is the rated revolving speed of the wind generating set.

The m1, m2, m3 and m4 can be set according to the local actual conditions. For example, in a certain city, m1 can be set at 600rpm, m2 can be set at 610rpm, m3 can be set at 1,400rpm, and m4 can be set at 1,410rpm.

Therefore, the actual gains of the first PID controller and the second PID controller are set at each revolving speed section of the wind generating set by using each adjusting module 4024, 4025, 4026, and 4027, respectively, so that the adjustment of the torque of the wind generating set meets the requirement to reduce the flicker.

Finally, it should be noted that the above embodiments are merely provided for describing the technical solutions of the present invention, but not intended to limit the present invention. It should be understood by those of ordinary skill in the art that although the present invention has been described in detail with reference to the foregoing embodiments, modifications can be made to the technical solutions described in the foregoing embodiments, or equivalent replacements can be made to some technical features in the technical solutions, as long as such modifications or replacements do not cause the essence of corresponding technical solutions to depart from the scope of the present invention.

Claims

1. A power control method for a wind generating set comprising the following steps:

   Acquiring an actual torque $T_N$ and a preset torque $T_M$ of the wind generating set; and judging whether a first PID controller and a second PID controller of the wind generating set need to be simultaneously operated according to the actual torque $T_N$ and the preset torque $T_M$, and if so, simultaneously operating the first PID controller and the second PID controller.

2. The power control method for the wind generating set of claim 1, wherein the step of simultaneously operating the first PID controller and the second PID controller comprises:

   sending an operating signal to one or both of the first PID controller and the second PID controller which is not operated.

3. The power control method for the wind generating set of claim 1 or 2, wherein a rated gain of the first PID controller and a rated gain of the second PID controller are set to be different.

4. The power control method for the wind generating set of claim 1 or 2, wherein the rated gain of the second PID controller is 4 times that of the first PID controller.

5. The power control method for the wind generating set of claim 1 or 2, wherein an actual gain of the first PID controller and an actual gain of the second PID controller are adjusted, so that the actual torque of the wind generating set is not greater than the maximum preset torque or not smaller than the minimum preset torque, the maximum preset torque is a maximum torque corresponding to the current revolving speed, and the minimum preset torque is a minimum torque corresponding to the current revolving speed.

6. The power control method for the wind generating set of claim 1 or 2, wherein the step of acquiring the actual torque $T_N$ and the preset torque $T_M$ of the wind generating set comprises the following steps:

   acquiring an actual revolving speed of the wind generating set;
   acquiring the actual torque $T_N$ of the wind generating set according to an actual revolving speed difference, wherein the actual revolving speed difference is the difference between the actual revolving speed of the current moment and the actual revolving speed of a preset moment; and

   acquiring the preset torque $T_M$ of the wind generating set according to a preset working curve and the actual revolving speed.

7. The power control method for the wind generating set according to any one of claims 1 to 6, wherein the step of judging whether the first PID controller and the second PID controller of the wind generating set need to be simultaneously operated according to the actual torque $T_N$ and the preset torque $T_M$ comprises the following steps:

   comparing the difference between a ratio of the absolute value of $(T_N-T_M)$ to $T_M$ and a preset threshold value;
   when the ratio of the absolute value of $(T_N-T_M)$ to $T_M$ is smaller than or equal to the preset threshold value, operating the first PID controller, and prohibiting the second PID controller from working;
   when the ratio of the absolute value of $(T_N-T_M)$ to $T_M$ is greater than the preset threshold value, simultaneously operating the first PID controller and the second PID controller;
   wherein, the rated gain of the first PID controller is smaller than that of the second PID controller.

8. The power control method for the wind generating set of claim 7, wherein the preset threshold value is set at 0.02 to 0.10.

9. The power control method for the wind generating set of claim 7, wherein before the difference between the ratio of the absolute value of $(T_N-T_M)$ to $T_M$ and the preset threshold value is compared, the method also comprises the following steps:

   judging a revolving speed section of the actual revolving speed of the wind generating set in a working curve;
   when the actual revolving speed is in a first revolving speed section, adjusting an actual gain of the first PID controller and an actual gain of the second PID controller to 30 to 60 percent of the rated gain of the first PID controller and the rated gain of the second PID controller, respectively, wherein the revolving speed in the first revolving speed section is greater than or equal to 0 and smaller than or equal to m1;
   when the actual revolving speed is at the second revolving speed section, adjusting the actual gain of the first PID controller and the actual gain of the second PID controller to 60 to 85 percent of the rated gain of the first PID controller and the rated gain of the second PID controller, respectively, wherein the revolving speed of the second revolving speed section is greater than m1 and smaller than or equal to m2;

when the actual revolving speed is at the third revolving speed section, adjusting the actual gain of the first PID controller and the actual gain of the second PID controller to 90 to 100 percent of the rated gain of the first PID controller and the rated gain of the second PID controller, respectively, wherein the revolving speed of the third revolving speed section is greater than m2 and smaller than or equal to m3; and
when the actual revolving speed is at the fourth revolving speed section, adjusting the actual gain of the first PID controller and the actual gain of the second PID controller to 70 to 90 percent of the rated gain of the first PID controller and the rated gain of the second PID controller, respectively, wherein the revolving speed of the fourth revolving speed section is greater than m3 and smaller than or equal to m4;
wherein, m1 is greater than or equal to 600rmp, m2 is greater than m1, m3 is greater than m2, m4 is greater than m3, and m4 is the rated revolving speed of the wind generating set.

10. A power control system for a wind generating comprising:

a torque acquisition module, which is used for acquiring an actual torque $T_N$ and a preset torque $T_M$ of the wind generating set; and
a first judgment module, which is used for judging whether the first PID controller and the second PID controller of the wind generating set need to be simultaneously operated according to the actual torque $T_N$ and the preset torque $T_M$, and if so, simultaneously operating the first PID controller and the second PID controller.

11. The power control system for the wind generating set of claim 10, wherein the first judgment module is concretely used for judging whether the first PID controller and the second PID controller of the wind generating set are simultaneously operated according to the actual torque $T_N$ and the preset torque $T_M$, and if so , sending an operating signal to one or both of the first PID controller and the second PID controller which is not operated.

12. The power control system for the wind generating set of claim 10, wherein a rated gain of the second PID controller is 4 times that of the first PID controller.

13. The power control system for the wind generating set of claim 10, also comprising:

a value limiting module, which is used for adjusting an actual gain of the first PID controller and an actual gain of the second PID controller, so that an actual torque of the wind generating set is not greater than a maximum preset torque or not smaller than a minimum preset torque, the maximum preset torque is a maximum torque corresponding to the current revolving speed, and the minimum preset torque is a minimum torque corresponding to the current revolving speed.

14. The power control system for the wind generating set of claim 10, wherein the torque acquisition module comprises:

a first acquisition sub-module, which is used for acquiring an actual revolving speed of the wind generating set;
a second acquisition sub-module, which is used for acquiring the actual torque $T_N$ of the wind generating set according to an actual revolving speed difference, wherein the actual revolving speed difference is the difference between the actual revolving speed of the current moment and the actual revolving speed of a preset moment; and
a third acquisition sub-module, which is used for acquiring the preset torque $T_M$ of the wind generating set according to a preset working curve and the actual revolving speed.

15. The power control system for the wind generating set of claim 10, wherein the first judgment module comprises:

a comparison sub-module, which is used for comparing a ratio of the absolute value of $(T_N-T_M)$ to $T_M$ with a preset threshold value; and
an operating selection sub-module, which is used for operating the first PID controller and prohibiting the second PID controller from working when the ratio of the absolute value of $(T_N-T_M)$ to $T_M$ is smaller than or equal to the preset threshold value, and simultaneously operating the first PID controller and the second PID controller when the ratio of the absolute value of $(T_N-T_M)$ to $T_M$ is greater than the preset threshold value, wherein, the rated gain of the first PID controller is smaller than that of the second PID controller, and the preset threshold value is 0.02 to 0.10.

16. The power control system for the wind generating set according to any one of the claims 10 to 15 comprising a gain adjusting module, wherein the gain adjusting module comprises:

a second judgment sub-module which is used for judging a revolving speed section of the actual revolving speed of the wind generating set in a working curve;

a first adjusting sub-module, which is used for adjusting the actual gain of the first PID controller and the actual gain of the second PID controller to 30 to 60 percent of the rated gain of the first PID controller and the rated gain of the second PID controller, respectively, wherein the revolving speed of the first revolving speed section is greater than or equal to 0 and smaller than or equal to m1;

a second adjusting sub-module, which is used for adjusting the actual gain of the first PID controller and the actual gain of the second PID controller to 60 to 85 percent of the rated gain of the first PID controller and the rated gain of the second PID controller, respectively, wherein the revolving speed of the second revolving speed section is greater than m1 and smaller than or equal to m2;

a third adjusting sub-module, which is used for adjusting the actual gain of the first PID controller and the actual gain of the second PID controller to 90 to 100 percent of the rated gain of the first PID controller and the rated gain of the second PID controller, respectively, wherein the revolving speed of the third revolving speed section is greater than m2 and smaller than or equal to m3; and

a fourth adjusting sub-module, which is used for adjusting the actual gain of the first PID controller and the actual gain of the second PID controller to 70 to 90 percent of the rated gain of the first PID controller and the rated gain of the second PID controller, respectively, wherein the revolving speed of the fourth revolving speed section is greater than m3 and smaller than or equal to m4;

wherein, m1 is greater than or equal to 600rmp, m2 is greater than m1, m3 is greater than m2, m4 is greater than m3, and the m4 is the rated revolving speed of the wind generating set, and wherein the second judgment sub-module is also used for triggering the first adjusting sub-module when the actual revolving speed is in the first revolving speed section, triggering the second adjusting sub-module when the actual revolving speed is in the second revolving speed section, triggering the third adjusting sub-module when the actual revolving speed is in the third revolving speed section, and triggering the fourth adjusting sub-module when the actual revolving speed is in the fourth revolving speed section.

acquiring an actual torque $T_N$ and a preset torque $T_M$ of the wind generating set ⟋ 101

judging whether a first PID controller and a second PID controller of the wind generating set need to be simultaneously operated according to the actual torque $T_N$ and the preset torque $T_M$, and if so, simultaneously operating the first PID controller and the second PID controller ⟋ 102

FIG. 1

FIG. 2A

FIG. 2B

FIG. 3A

FIG. 3B

Torque Acquisition Module ——— 401

First Judgment Module ——— 402

400

FIG. 4

4012

Second Acquisition
Sub-module

4011

First Acquisition
Sub-module

4013

Third acquisition
sub-module

401

Torque Acquisition Module

402

First Judgment Module

400

FIG. 5

FIG. 6